Europäisches Patentamt

European Patent Office

Office européen des brevets

(19)

(11) Publication number: **0 020 479**
**B1**

(12) **EUROPEAN PATENT SPECIFICATION**

(45) Date of publication of patent specification: **22.06.83**

(51) Int. Cl.³: **E 04 F 17/04, F 01 N 1/24**

(21) Application number: **79901308.1**

(22) Date of filing: **20.09.79**

(86) International application number:
**PCT/US79/00746**

(87) International publication number:
**WO 80/00724 17.04.80 Gazette 80/8**

(54) BRANCH TAKE-OFF AND SILENCER FOR AN AIR DISTRIBUTION SYSTEM.

(30) Priority: **20.09.78 US 944133**
**10.09.79 US 73603**

(43) Date of publication of application:
**07.01.81 Bulletin 81/1**

(45) Publication of the grant of the patent:
**22.06.83 Bulletin 83/25**

(84) Designated Contracting States:
**FR**

(56) References cited:
**DE - A - 1 683 572**
**FR - A - 2 266 780**
**US - A - 1 916 908**
**US - A - 2 295 251**
**US - A - 2 872 859**
**US - A - 3 452 667**
**US - A - 3 482 504**
**US - A - 3 965 933**

(73) Proprietor: **MITCO CORPORATION**
**440 Somerville Avenue**
**Somerville, MA 02143 (US)**

(72) Inventor: **GORCHEV, Dimiter**
**8 Whittier Place**
**Boston, MA 02114 (US)**
Inventor: **INGARD, Karl Uno**
**Kittery Point**
**ME 03905 (US)**

(74) Representative: **Holdcroft, James Gerald, Dr. et al,**
**Graham Watt & Co. Riverhead**
**Sevenoaks Kent TN13 2BN (GB)**

Courier Press, Leamington Spa, England

Branch take-off and silencer for an air distribution system

## BACKGROUND OF THE INVENTION

This invention relates to air distribution systems and more particularly to apparatus for extracting air from a main supply duct to a branch duct.

In a conventional air distribution system in a building, the air is branched from the main air supply duct to the various branch ducts through openings in the wall of the main duct which enter into the branch ducts.

Generally, the volume flow rate through the branch is determined by the static pressure in the main duct and the flow resistance of the branch. Since the branch opening is flush with the wall of the main duct, the dynamic pressure of the flow in the main duct does not contribute to the flow rate in the branch.

In such configurations, the noise level at the entrance to the branch duct is substantially the same as the noise level in the main duct. This level is generated mainly by the air supply fan, which noise travels through the main air duct without much attenuation. In the prior art, to reduce the noise level, a silencer is typically used at the exit of the fan in the main supply duct. Frequently a silencer is also incorporated at the inlet to the main supply fan.

In order to minimize the effects of the silencer on the system, the silencer must have a low pressure drop and its total open area must be large. Thus, if adequate acoustic attenuation is to be achieved, the silencer dimensions must be made quite large. This means that the silencer has the disadvantage, not only of being costly, but also bulky, requiring a large amount of space. If the dimensions of the silencer are reduced, the pressure drop will increase and it may then be necessary to select a larger fan to achieve the required total volume flow rate through the main duct. This latter alternative is extremely costly from an energy standpoint.

In order to further attack the noise problem, silencers may be introduced in the branch ducts, or alternatively, the branch ducts may incorporate noise attenuating liners. It should be kept in mind, however, that in order for such a silencer or liner to be effective at low frequencies, the absorptive elements must be quite thick, and in order for the pressure drop in the branches to be kept to an appropriately low value, the dimensions must be correspondingly large. This leads to impractical distribution systems.

It is an object of the present invention to provide an improved branch duct take-off.

## SUMMARY OF THE INVENTION

Briefly, the present invention is a composite branch take-off and silencer for an air distribution system wherein an airstream from an input duct may be coupled to an output duct and one or more branch ducts. The input and output ducts have a co-linear central axis and similar cross-sectional shapes at the ends to be coupled, with the input duct having a larger cross-sectional area than the output duct. Each branch duct has a central axis at the end to be coupled to airstream in the input duct, which is offset from the common central axis of the input and output ducts.

In accordance with the present invention, an outer section is coupled to the downstream end of the input duct. The outer section has a cross-section substantially the same as the cross-section of the input duct at the downstream end. An inner section is coupled to the upsteam end of the output duct. The inner section has a cross-section substantially the same as the cross-section of the output duct at that upstream end. The input and output sections have a common central axis which is co-linear with the central axes of the input and output ducts. The inner section extends into the outer section to define a shell region between the overlapping portions of those sections. The shell region is sealed with a sound absorbent material at the downstream end, i.e. near the output duct. The other end of the shell region is open to receive a portion of the airstream from the input duct. The shell region is divided into a number of adjacent channels extending from a point near the input duct to intermediate points within the shell region. Preferably, the intermediate points are equidistance from the upstream end of the shell region. The portion of the shell region between the intermediate points and the end of the shell region near the output duct forms a common plenum. The plenum is coupled to the branch ducts.

Generally, the channels are formed in the shell region by a plurality of sound-absorbing, elongated, tapered wedges having thickness substantially equal to the distance between the inner and outer sections and extending longitudinally from a point near the upstream end of the shell region to the intermediate points. The wedges are disposed within the shell region in order to establish the channels between adjacent wedges.

In one form of the invention, the inner and outer sections and the input and output ducts are substantially cylindrical, and the tapered wedges are adapted to provide generally helical channels. Each helical channel is characterized by a central axis at an associated intermediate point, which is substantially tangent to a reference plane, where the reference plane passes through the intermediate point and is perpendicular to the common central axis of the inner and outer sections. In this configuration, a substantially circumferential airflow is formed in the plenum from the air tapped through the channels from the input duct. This circumferential airflow is then coupled to the duct branches by means of velocity pressure established in that plenum.

In alternative embodiments, the channels in the shell region may be straight so that a relatively high static pressure is built up in the plenum. In the latter type of configuration, the static pressure drives the airflow tapped from the input duct to the branch ducts. In still other embodiments, the channels in the shell region may lie between the above-noted examples so that a combination of velocity pressure and static pressure may be utilized to drive the tapped airflow into the branch ducts. In still other embodiments, the input and output ducts, and inner and outer sections may have polygonal cross-sections in keeping with the present invention. In all of these embodiments, each channel acts in effect as an acoustically line duct with the two opposite sides being lined with sound absorbent material, such as glass wool. The dimensions of the channel forming the wedges may be selected to provide attenuation of noise in selected frequency ranges using conventional techniques. All of these configurations are relatively efficient in that the combination branch take-off and silencer requires less space, less driving power, less sheet metal, and generate less noise compared with prior art devices for comparable airflow characteristics.

BRIEF DESCRIPTION OF THE DRAWING

The foregoing and other objects of this invention, the various features thereof, as well as the invention itself, may be more fully understood from the following description when read together with the accompanying drawing in which:

Fig. 1 shows a sectional view of an embodiment of the present invention;

Figs. 2—4 show sectional views of the embodiment of Fig. 1;

Figs. 3 and 4 show sectional views of an alternative embodiment of the present invention;

Figs. 5—9 show sectional views of other embodiments of the present invention;

Figs. 10 and 11 show perspective views of additional embodiments of the present invention; and

Figs. 12 and 13 show a perspective view of exemplary static pressure regain couplers adapted for use with the embodiment of Fig. 11.

DESCRIPTION OF THE PREFERRED EMBODIMENT

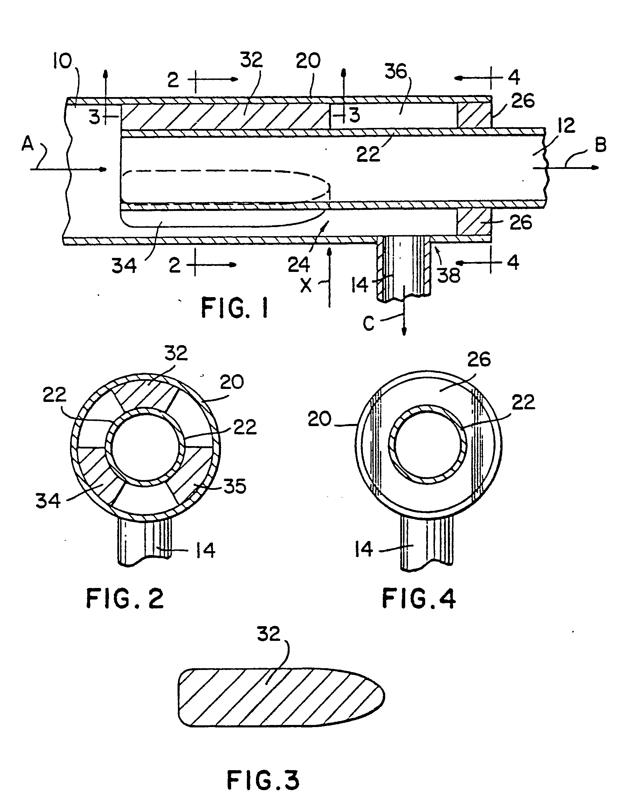

Fig. 1 shows an exemplary branch take-off and silencer for air distribution system having an input duct 10, an output duct 12 and a branch duct 14. Airflow through the apparatus of Fig. 1 is indicated by the arrows A, B and C in that figure. Figs. 2, 3 show sectional views of the elements of Fig. 1. The elements in Figs. 2—4 which correspond to elements in Fig. 1 are identified by identical reference numerals.

Ducts 10 and 12 have similar, i.e. same shape, cross-sections. In this example, cross-sections are circular, with the input duct having a relatively large cross-section compared with the output duct. The ducts 10 and 12 are substantially coaxial at the ends to be coupled. In the illustrated embodiments, ducts 10 and 12 overlap. The overlapping portion of duct 10 is referred to hereinafter as the outer section 20 of the invention. The overlapped portion of duct 12 is referred to hereinafter as the inner section 22 of the invention. In the present embodiment, inner and outer sections 20 and 22 are formed by extensions of the respective ducts 10 and 12. In alternative embodiments, sections 20 and 22 may be separate from the ducts 10 and 12 but joined to the respective ducts at the point of overlap.

The shell region between the sections 20 and 22 is referred to generally by reference designation 24 in Fig. 1. In the present embodiment, the shell region 24 is annular. An annular plug 26 provides a seal to the shell region at the downsteam end of that region. Plug 26 is a porous acoustical material such as glass wool.

The annular shell region 24 is open at its upsteam end to the oncoming airflow in the input duct 10 (indicated by arrow A). The airflow in the shell region 24 exits to the branch duct 14 near the downstream end of region 24. In the illustrated embodiment, the annular region 24 is divided into three adjacent channels which are separated by elongated partitions 32, 34 and 35 of porous acoustical material, such as glass wool. In Fig. 1, only two partitions denoted 32 and 34 are shown, although all three may be seen in Fig. 2. The partitions are generally tapered from upsteam to downstream end and have a dimension equal to the radial distance between sections 20 and 22 in the radial direction. The channels extend from a point near the upstream end of sections 20 and 22 to an intermediate point denoted by their reference designation X in Fig. 1 in the region 24. Beyond the channels in region 24 is a substantially annular common plenum 36 which is coupled to the branch duct by means of a butt joint 38.

Each channel acts like an acoustically lined duct, with two opposite sides lined. Since the porous partitions in the annular region 24 can be made quite thick, such as 20.3 cm in typical 91.4 cm diameter duct, the attenuation of the device can be more than adequate throughout the entire frequency range of interest. Thus, the resultant attenuation is comparable to that of a large fan silencer. Unlike the fan silencer, however, the present invention can be increased in length without the need for additional space.

The frequency dependence of the acoustic attenuation of the device may readily be adjusted by variations in the width of the channels (i.e. the distance between the two porous walls in the channel), and the thickness and number of the porous partitions in the annular section. The density of the porous material is also a parameter which can be chosen independently of the others. In the preferred embodiment, the density is selected to be about 96 Kg/m³. The required length, L, for the channel is less than 1/3 of the product of the width of the channel, W, and the desired attenuation A. The details of the frequency dependence of the attenuation may be determined from well-known procedures for lined ducts.

In the illustrated embodiment, the channels in through section 24 are relatively straight. In response to airflow A, a relatively high static pressure is built up in region 36, with this high static pressure driving airflow into the branch duct to form a branch airflow denoted by reference designation C. The remaining portion of the main airflow exits into the output ducts and is denoted in Fig. 1 by reference designation B.

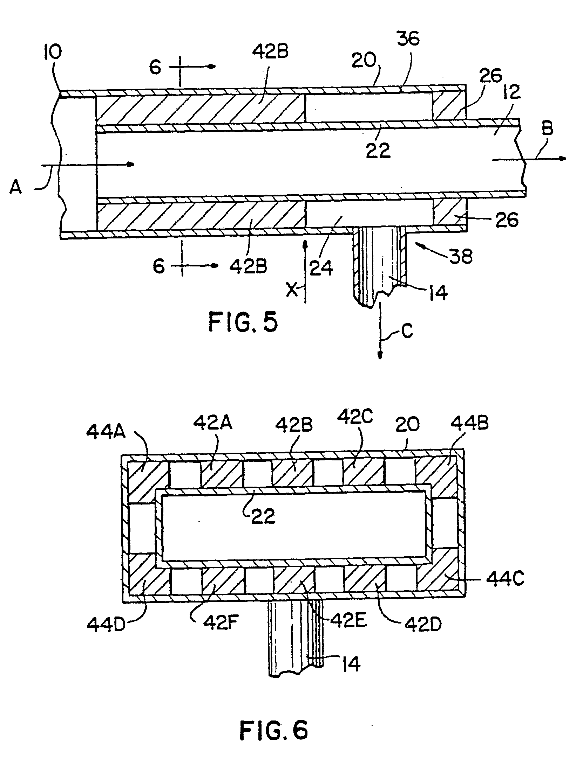

Figs. 5—6 and Figs. 7—9 illustrate further embodiments of the present invention. In those figures, elements corresponding to similar elements in the embodiment of Figs. 1—4 are identified with the same reference designations. Figs. 5 and 6 show a form of the invention suitable for coupling rectangular input and output ducts. In still other embodiments, ducts may have alternative polygonal cross-section shapes.

In the embodiment of Figs. 5 and 6, the channel forming members 42A—42F are substantially the same shape as the corresponding member 32 in the above-described embodiment, except the top and bottom surfaces are planar for members 42A—42F in order to provide a flush fit with the inner and outer surfaces of sections 20 and 22, respectively. In Figs. 5—6, there are four corner channel forming members 44A—44D which extend to the point X as to the members 42A—42F, with the members 44A—44D forming broadening channels for airflow in the shell region 24. The plug 26 has rectangular inner and outer surfaces to provide a seal at the end of the overlapping portions of inner and outer sections 20 and 22.

In operation, the embodiment of Figs. 5 and 6 operates substantially in the same manner as the embodiment of Figs. 1—4, with a static pressure build-up in plenum 36 driving airflow tapped from the main stream into the branch duct 14. Similarly, the remaining portion of the main stream is represented by flow arrow B into the output duct 12.

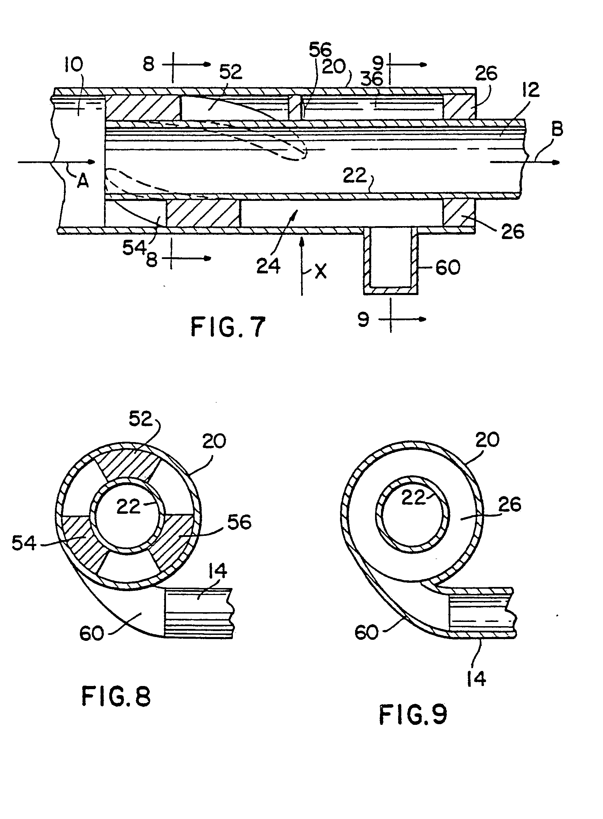

The embodiment of Figs. 7—9 illustrates another embodiment suitable coupling an airstream in an input duct 10 (represented by arrow A) to a branch duct 14 (arrow C) with the remainder of the airstream continuing to the output duct 12 (arrow B).

This latter embodiment is substantially similar to that in Figs. 1—4 except that the partitions 52, 54 and 56 are adapted to form channels in the shell region 24 having substantially helical central axes extending from the portion of shell region adjacent to intput duct 10 to the intermediate point X. At the point X, the central axes of these channels are substantially parallel to a plane passing through point X and being perpendicular to the common axis of sections 20 and 22. Thus, in this embodiment, the channel axes are generally helical with a pitch varying from infinite at the input and to zero at the output end.

With this configuration, air tapped from the input duct 10 and passing through the shell region 24 is directed to flow circumferentially in the plenum 36 (in the counter-clockwise direction viewed from duct 10 in the embodiment of Fig. 7—9). A junction 60 is provided to tap off the airflow from the flow direction in plenum 36 and couple that airflow to the branch duct 14. For this junction, conventional techniques may be utilized, such as those found in centrifugal fans, for example. In this embodiment, the velocity pressure of the airstream moving in the direction flow of plenum 36 drives the tapped air through junction 60 to the branch duct 14. In alternative embodiments, the junction section 60 may provide fully tangential take-off of the air-flow from the plenum. In such embodiments the outer wall 61 of section 60 is substantially planar and is tangent to the section 20 where joining that section.

In all the above embodiments, only a single branch duct 14 is illustrated, although in other embodiments, additional branch ducts may be incorporated similarly.

In the illustrated embodiments, the partitions forming the channels are tapered, and provide widening channels in the straight channel embodiments, and substantially uniform width channels in the helical embodiments. In alternative embodiments, the partitions in the shell region may establish the channels having substantially uniform width. In such cases, helical channel embodiments, the channels are tapered, while in the straight channel embodiments the channels are uniform width.

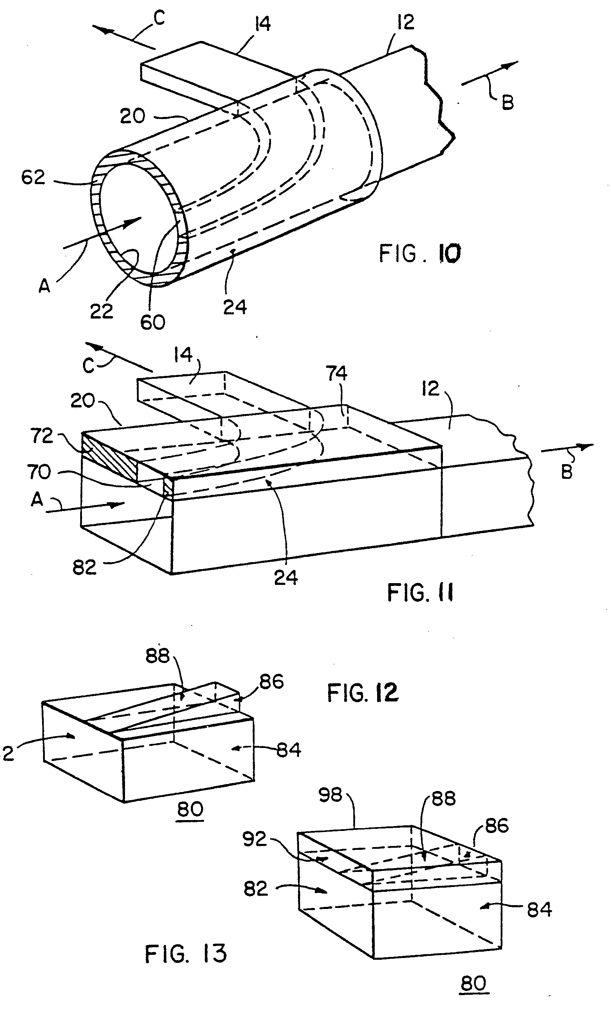

Figs. 10 and 11 show other alternative configurations of the present invention adapted for coupling an input duct with an output duct and a single branch duct. In those figures, elements having corresponding elements in the configurations of Figs. 1—9 are identified by the same reference designations.

In Fig. 10, a branch take-off and silencer device is shown with a similar cross-section inner section 22 and outer section 20 defining a shell region 24. The sections 20 and 22 are substantially coaxial. In this embodiment, section 22 is formed by an extension of the output duct. In alternative forms, section 22 may be separate from the output duct but joined at the downstream end to that duct.

In the illustrated embodiment, a single airflow channel 60 is established in the shell region 24 by a partition member 62 which fills the shell region 24, except for the channel 60. The partition member 62 is preferably a porous acoustical material, such as glass wool. This channel is adapted at its upstream end to receive a portion of the oncoming airflow (indicated by arrow A) in the input duct 10 (not shown). This portion of the airflow in the shell region 24 exits to the branch duct 14 near the downstream end of region 24. In Fig. 10, only one channel is established for coupling to the single duct 14, although additional channels may similarly be coupled to additional output ducts in other embodiments. In alternate embodiments, a rectangular-to-circular cross-section converter may be used to match the rectangular channel 60 to a circular branch duct.

The configuration of Fig. 11 is particularly adapted for a rectangular cross-section output duct. As shown in Fig. 11, the output duct 12 includes a rectangular cross-section extension section 22. A rectangular cross-section outer section 20 overlaps the extension section 22. The dimensions of these sections 20 and 22 are adapted so that section 22 fits snugly within section 20 along three sides and provides a shell region 24 along the fourth side. A single airflow channel 70 is established in the shell region 24 by partition members 72 and 74. Preferably members 72 and 74 are formed from a porous acoustic material. The channel 70 is adapted to receive a portion of the oncoming airflow (indicated by arrow A) in the input duct 10 (now shown). This portion of the airflow in the shell region 24 exits to the branch duct 14 near the downstream end of region 24. In alternate forms, additional channels may be established in region 24, or in additional similar regions which may be similarly formed along other sides of the overlapping sections 20 and 22. In addition, this form of the invention may be used with other overlapping polygonal cross-section sections, where the shell region is established between one pair of planar faces of the inner and outer sections. In still other embodiments, additional channels which lead to additional branch ducts may be established in that shell region or in similar shell regions between additional pairs of planar faces of the inner and outer sections.

Although the present embodiments have been described in terms of overlapping input and output ducts, functionally equivalent interface ducts may be used to couple those input and output ducts. In addition, while rectangular and circular cross-section ducts have been described, it will be understood that other cross-section shapes may similarly be utilized within the scope of the invention. For example, overlapping elliptical ducts may be used in one such form.

The take-off and silencer (TO/S) devices shown in Figs. 10 and 11 may be used in one form where the input duct 10 has substantially the same cross-section as the upstream end of outer section 22. In another form, the TO/S device of Fig. 10 may be used with a static pressure regain (SPR) coupler between the input duct 10 and the upstream end of the TO/S device. The latter form is particularly advantageous where the input duct 10 and output duct 12 have substantially the same cross-sections.

In this form, the SPR coupler defines an airflow port at its upstream end having substantially the same cross-section as the TO/S inner section 22. This end of the SPR coupler is directly coupled to the input duct 10. In addition, the SPR coupler defines an airflow port at its downstream end which has substantially the same cross-section as the TO/S inner section and in addition includes a port extending from a channel from the interior of the SPR coupler inner section. This latter port is adapted to couple to one or more of the channels in the TO/S shell region. The SPR coupler may be a discrete element or may be integral with the TO/S device. With this configuration, the airflow velocity decreases as the flow passes from the input duct to the output duct resulting in a static pressure gain along that path. A relatively minor portion of the flow from the input duct is tapped off to the channels leading to the branch ducts.

Fig. 12 shows an exemplary SPR coupler 80 for use at the input end of the TO/S configuration of Fig. 11. That exemplary device 80 includes a rectangular port 82 at its upstream end for coupling to rectangular input duct 10, a rectangular port 84 for coupling to inner section 22, and a rectangular port 86 for coupling to channel 70. As shown, port 86 terminates a channel 88 adapted to pass a portion of the input airflow to channel 70. In the illustrated form, the channel 88 is formed by the upper (as shown) surface of the device 80. Fig. 13 shows an alternative form of device 80, having a similar channel 88 established by acoustic materials 92 which may be positioned within a shell region (similar to region 24 in the TO/S device) established by housing member 98.

In various applications, the SPR coupler may be utilized immediately adjacent to the upstream end of a TO/S device, as suggested above in conjunction with Figs. 11 and 12. Alternatively, the SPR coupler may be coupled to the upstream end of a TO/S by an extended coupling duct. In the latter form, a number of TO/S devices may be deployed in series, with the downstream end of each such device being directly coupled to the SPR coupler for the next TO/S device, which in turn is coupled to that TO/S device by such an extended duct.

**Claims**

1. Apparatus for coupling an airstream from an end of an input duct (10) to an end of an output duct (12) and at least one branch duct (14), comprising

A. an inner section (22) having a cross-section substantially the same as the cross-section of said output duct (12), said inner section (22) being adapted for coupling at one end to said end of said output duct (12), and

B. an outer section (20) disposed about at least a portion of said inner section (22) and defining a shell region (24) between said inner section (22) portion and said outer section (20),

C. partition means for establishing at least one channel within said shell region (24), said channel extending from a point near the end of said shell region (24) adjacent to said input duct (10) to the inlet end of said branch duct (14), and

D. branch coupling means for coupling said channel to said branch duct.

2. Apparatus according to claim 1 wherein said input and output ducts have circular cross-sections at said ends to be coupled, whereby said channel has a central axis which is parallel to the central axis of said input duct (10) near the end of said shell region (24) adjacent to said input duct (10) and parallel to the central axis of said branch duct (14) near said end of said branch duct (14).

3. Apparatus according to claims 1 or 2 wherein said channel means comprises a sound absorbing element disposed within said shell region.

4. Apparatus according to claim 1 wherein said input and output ducts have polygonal cross-sections at said ends to be coupled.

5. Apparatus according to claim 4 wherein said shell region (24) is established between one pair of parallel planar faces of said inner and outer sections.

6. Apparatus according to claim 1 wherein said branch coupling means comprises a coupling whereby said branch duct (14) is joined to said outer section (20) by a junction means to establish an airflow path between said channel and the region interior to said branch duct (14).

7. Apparatus according to claim 1 further including a plug means (26) for sealing the end of said shell region (24) adjacent to said output duct (12), and wherein said channel means includes means for establishing a plurality of channels in said shell region (24), said channels extending from a point near the end of said shell region (24) adjacent to said input duct (10) to an intermediate point within said shell region (24), whereby the portion of said shell region (24) between said intermediate point and said plug means (26) forms a common plenum, and said branch coupling means includes means for coupling said plenum to said branch ducts (14).

8. Apparatus according to claim 7 wherein said input and output ducts have cylindrical cross-sections at said ends to be coupled, whereby said plenum is annular.

9. Apparatus according to claim 7 or claim 8 wherein said channel means comprises a plurality of sound absorbing wedges (32, 34, 35) having thickness substantially equal to the distance between said inner and outer sections, said wedges being disposed within said shell region (24) and wherein said tapered wedges have a curved central axis whereby said channels have a substantially helical central axis.

10. Apparatus according to claim 9 wherein the direction of said helical channels at said intermediate point are approximately tangent to a plane passing through said annular plenum at said intermediate point, said plane being perpendicular to said inner section axis, and wherein said annular plenum has a characteristic flow direction about said outer section axis substantially tangent to said helical central axes at said intermediate point.

11. Apparatus according to claim 1 further including a static pressure regain coupler comprising:

i. an input port (82) having a cross-section substantially the same as the cross-section of said input duct (10), and adapted to receive substantially all the air in said airstream,

ii. an output port having a cross-section including at least two parts, the first of said parts having substantially the same cross-section (84) at its downstream end as said output duct (12) and the second of said parts having substantially the same cross-section (86) at its downstream end as an associated one of said channels, wherein said second part is contiguous to said first part,

iii. a first airflow guide adapted to pass a first portion of said received air through said first part to said output duct (12),

iv. a second airflow guide adapted to pass a second portion of said received air through said second part to said associated channel.

12. Apparatus according to claim 11 wherein said first port means (82) includes an inner section defining an airflow path between said input port (10) and said first output port (12), and wherein said second port means (86) includes an outer section defining a shell region adjacent to the exterior of said inner section, and a channel means (88) for defining an airflow path from the interior of said inner section to said second output port (86).

**Revendications**

1. Dispositif destiné à faire communiquer l'air qui sort d'une extrémité d'un conduit d'entrée (10) avec une extrémité d'un conduit de sortie (12) et avec au moins un conduit secondaire de dérivation (14), dispositif comprenant

A. un tronçon intérieur (22) dont la section droite est sensiblement la même que celle de ce conduit de sortie (12) et qui est destiné à être relié d'un côté à l'extrémité précitée dudit conduit de sortie (12);

B. un tronçon extérieur (20), qui est disposé autour d'une partie au moins de ce tronçon intérieur (22) et qui délimite une zone chemisée (24) entre lui-même (20) et ledit tronçon intérieur (22);

C. des éléments de cloisonnement destinés à délimiter au moins un canal dans cette zone chemisée (24), ce canal partant d'un point voisin de l'extrémité de ladite zone (24) adjacente au conduit d'entrée (10) et allant jusqu'à l'extrémité d'entrée du conduit de dérivation (14); et

D. un raccord de branchement destiné à faire communiquer ce canal avec ce conduit de dérivation.

2. Dispositif selon la revendication 1, dans lequel le conduit d'entrée et le conduit de sortie ont, à leurs extrémités destinées à être reliées, une section droite circulaire, l'axe du canal étant parallèle à celui de ce conduit d'entrée (10) à proximité de l'extrémité de la zone chemisée (24) adjacente audit conduit d'entrée (10) et étant parallèle à l'axe du conduit de dérivation (14) à proximité de l'extrémité d'entrée de ce dernier.

3. Dispositif selon l'une des revendications 1 et 2, dans lequel les éléments de cloisonnement sont des éléments insonorisants disposés dans la zone chemisée.

4. Dispositif selon la revendication 1, dans lequel la section droite des conduits d'entrée et de sortie, à leurs extrémités destinées à être reliées, est polygonale.

5. Dispositif selon la revendication 4, dans lequel la zone chemisée (24) est formée entre deux faces planes parallèles des tronçons intérieur et extérieur.

6. Dispositif selon la revendication 1, dans lequel l'élément de branchement du conduit de dérivation est un raccord, ce conduit de dérivation (14) étant relié au tronçon extérieur (20) par un joint, de façon à former un passage pour l'air entre le canal et l'intérieur dudit conduit de dérivation (14).

7. Dispositif selon la revendication 1, comportant encore un bouchon (26) qui obture l'extrémité de la zone chemisée (24) adjacente au coinduit de sortie (12); dans lequel les éléments de cloisonnement se composent d'éléments destinés à délimiter un certain nombre de canaux dans la zone chemisée (24), ces canaux partant d'un point voisin de l'extrémité de cette zone (24) adjacente au conduit d'entrée (10) et allant jusqu'à un point intermédiaire situé dans ladite zone (24), de sorte que la partie de cette zone chemisée (24) qui est située entre ce point intermédiaire et le bouchon (26) forme une chambre commune (36), et l'élément de branchement comportant des éléments destinés à faire communiquer cette chambre avec les conduits de dérivation (14).

8. Dispositif selon la revendication 7, dans lequel la section droite des conduits d'entrée (10) et de sortie (12), à leurs extrémités destinées à être reliées, est circulaire, de sorte que la chambre (36) est annulaire.

9. Dispositif selon l'une des revendications 7 et 8, dans lequel les éléments de cloisonnement sont des coins insonorisants (32, 34, 35) dont l'épaisseur est sensiblement égale à la distance qui sépare les tronçons intérieur et extérieur, et qui sont disposés dans la zone chemisée (24); et dans lequel l'axe de ces coins à section décroissante est courbe, de sorte que l'axe des canaux est sensiblement hélicoïdal.

10. Dispositif selon la revendication 9, dans lequel les orientations desdits canaux hélicoïdaux audit point intermédiaire sont approximativement tangentes à un plan qui coupe la chambre annulaire, qui passe par le point intermédiaire et qui est perpendiculaire à l'axe du tronçon intérieur; et dans lequel cette chambre annulaire fait s'écouler l'air autour de l'axe du tronçon extérieur sensiblement tangentiellement à ces axes hélicoïdaux en ce point intermédiaire.

11. Dispositif selon la revendication 1, comportant de plus un raccord d'augmentation de la pression statique, comprenant

i. un orifice d'entrée (82) dont la section droite est sensiblement la même que celle du conduit d'entrée (10) et qui est destiné à laisser pratiquement tout l'air circulant dans ce conduit d'entrée (10);

ii. un orifice de sortie qui est composé d'au moins deux parties, la première de ces parties ayant sensiblement à son extrémité aval la même section (84) que le conduit de sortie (12) et la seconde de ces parties ayant sensiblement à son extrémité aval la même section (86) que celui des canaux qui coopère avec elle et étant contiguë à ladite première partie;

iii. un premier guide d'écoulement, destiné à faire passer par ladite première partie et vers le conduit de sortie une première fraction de l'air reçu; et

iv. un second guide d'écoulement destiné à faire passer, par la seconde partie, et vers le canal correspondant, une seconde fraction de l'air reçu.

12. Dispositif selon la revendication 11, dans lequel le premier orifice (82) comporte une partie intérieure délimitant un passage pour l'air entre le conduit d'entrée (10) et le conduit de sortie (12); et dans lequel le second orifice (86) comporte une partie extérieure délimitant une zone chemisée adjacente à la surface extérieure de cette partie intérieure et un canal (88) délimitant pour l'air un passage entre l'intérieur de ladite partie intérieure et ce second orifice de sortie (86).

**Patentansprüche**

1. Vorrichtung zum Verbinden eines Luftstroms aus einem Ende einer Einlaßleitung (10) mit einem Ende einer Auslaßleitung (12) und zumindest einer Abzweigleitung, gekennzeichnet durch

A. einen Innenteil (22) mit einem Querschnitt, der im wesentlichen dem der Auslaßleitung (12) entspricht, wobei der Innenteil (22) an einem Ende mit dem Ende der Auslaßleitung (12) verbindbar ist,

B. einen Außenteil (20), der um zumindest einen Bereich des Innenteils (22) angeordnet ist und einen Umhüllungsbereich (24) zwischen dem Innenteil (22) und dem Außenteil (20) begrenzt,

C. Unterteilungsmittel zum Bilden zumindest eines Kanals innerhalb des Umhüllungsbereichs (24), der sich von einem Punkt nahe dem Ende des Umhüllungsbereichs (24), das an die Einlaßleitung (10) angrenzt, zum Einlaßende der Abzweigleitung (14) erstreckt, und

D. Abzweigleitungsanschlußmittel zum Verbinden des Kanals mit der Abzweigleitung.

2. Vorrichtung nach Anspruch 1, dadurch gekennzeichnet, daß die Einlaß- und die Auslaßleitung einen kreisförmigen Querschnitt an den zu verbindenden Enden aufweisen, wobei der Kanal eine Mittelachse aufweist, die parallel zur Mittelachse der Einlaßleitung (10) nahe dem der Einlaßleitung (10) benachbarten Ende des Umhüllungsbereichs (24) und parallel zur Mittelachse der Abzweigleitung (14) nahe dem Ende der Abzweigleitung (14) verläuft.

3. Vorrichtung nach Anspruch 1 oder 2, dadurch gekennzeichnet, daß die Kanalbildemittel ein innerhalb des Umhüllungsbereichs angeordnetes Schalldämmelement umfassen.

4. Vorrichtung nach Anspruch 1, dadurch gekennzeichnet, daß die Einlaß- und die Auslaßleitung einen polygonalen Querschnitt an den zu verbindenden Enden aufweisen.

5. Vorrichtung nach Anspruch 4, dadurch gekennzeichnet, daß der Umhüllungsbereich (24) zwischen zwei parallelen, planaren Flächen des Innen- und des Außenteils gebildet ist.

6. Vorrichtung nach Anspruch 1, dadurch gekennzeichnet, daß die Abzweigleitungsanschlußmittel einen Anschluß umfassen, durch den die Abzweigleitung (14) derart durch ein Verbindungsmittel an den Außenteil (20) angeschlossen ist, daß zwischen dem Kanal und dem inneren Bereich der Abzweigleitung (14) ein Luftströmungsweg gebildet ist.

7. Vorrichtung nach Anspruch 1, dadurch gekennzeichnet, daß sie Abschlußmittel (26) zum Abdichten des der Auslaßleitung (12) benachbarten Endes des Umhüllungsbereichs (24) umfaßt und daß die Unterteilungsmittel Mittel zum Bilden einer Mehrzahl von Kanälen im Umhüllungsbereich (24) aufweisen, wobei sich die Kanäle von einem Punkt in der Nähe des der Einlaßleitung (10) benachbarten Endes des Umhüllungsbereichs (24) zu einem Zwischenpunkt innerhalb des Umhüllungsbereichs (24) erstrecken, der Bereich des Umhüllungsbereichs (24) zwischen dem Zwischenpunkt und dem Abschlußmittel (26) eine gemeinsame Kammer bildet und die Abzweigleitungsanschlußmittel Mittel zum Verbinder der Kammer an die Abzweigleitungen (14) umfassen.

8. Vorrichtung nach Anspruch 7, dadurch gekennzeichnet, daß die Einlaß- und die Auslaßleitung einen zylindrischen Querschnitt an den zu verbindenden Enden aufweisen, wodurch die Kammer ringförmig ausgebildet ist.

9. Vorrichtung nach Anspruch 7 oder 8, dadurch gekennzeichnet, daß die Kanalbildemittel eine Mehrzahl von Schalldämmkeilen (32, 34, 35) umfassen, deren Dicke im wesentlichen gleich dem Abstand zwischen dem Innen- und dem Außenteil ist, daß die Keile innerhalb des Umhüllungsbereichs (24) angeordnet sind und daß die sich verjüngenden Keile eine gekrümmte Mittelachse aufweisen, wodurch die Kanäle eine im wesentlichen schraubenlinienförmige Mittelachse aufweisen.

10. Vorrichtung nach Anspruch 9, dadurch gekennzeichnet, daß die Richtung der schraubenlinienförmigen Kanäle an dem Zwischenpunkt etwa tangential zu einer durch die ringförmige Kammer an dem Zwischenpunkt hindurchgehenden Ebene verläuft, wobei die Ebene senkrecht zu der Achse des Innenteils angeordnet ist, und daß die ringförmige Kammer eine ihr eigene Strömungsrichtung um die Achse des Außenteils im wesentlichen tangential zu den schraubenlinienförmigen Mittelachsen an dem Zwischenpunkt aufweist.

11. Vorrichtung nach Anspruch 1, gekennzeichnet durch einen Verbinder zur Wiedergewinnung statischen Druckes, bestehend aus:

i. einer Einlaßöffnung (82), deren Querschnitt im wesentlichen gleich dem Querschnitt der Einlaßleitung (10) und die im wesentlichen für die gesamte Luft des Luftstroms aufnahmefähig ist,

ii. einer Auslaßöffnung mit einem aus zumindest zwei Teilen bestehenden Querschnitt, wobei der erste Teil an seinem stromabwärts liegenden Ende im wesentlichen den gleichen Querschnitt (84) wie die Auslaßleitung (12) und der zweite Teil an seinem stromabwärts liegenden Ende im wesentlichen den gleichen Querschnitt (86) wie ein zugehöriger der Kanäle aufweist, wobei der zweite Teil an den ersten Teil angrenzt,

iii. einer ersten Luftstromführung zur Führung eines ersten Anteils der aufgenommenen Luft durch den ersten Teil zur Auslaßleitung (12),

iv. einer zweiten Luftstromführung zur Führung eines zweiten Anteils der aufgenommenen Luft durch den zweiten Teil zu dem zugehörigen Kanal.

12. Vorrichtung nach Anspruch 11, dadurch gekennzeichnet, daß die erste Öffnung (82) einen einen Luftströmungsweg zwischen der Einlaßeinrichtung (10) und der ersten Auslaßöffnung (12) bildenden Innenteil und die zweite Öffnungseinrichtung (86) einen Außenteil umfaßt, der einen an die Außenseite des Innenteils angrenzenden Umhüllungsbereich bildet, und daß ein Kanal (88) vorgesehen ist, der einen Luftströmungsweg vom Inneren des Innenteils zur zweiten Auslaßöffnung (86) bildet.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13